# EUROPEAN PATENT APPLICATION

(11) **EP 2 078 588 A2**
(43) Date of publication of application: **15.07.2009**
(21) Application number: 08173078.0
(22) Date of filing: 30.12.2008
(51) Int. Cl.: B24B 9/00, B24D 13/04, B24B 29/08

(54) **Machine for removing the weld bead from continous-welded tubes**

(30) Priority: 08.01.2008 IT MI20080016
(71) Applicant: Olimpia 80 SRL, 27020 Borgo San Siro (PV) (IT)
(72) Inventor: Travini, Vittorio, 27020 Borgo San Siro (PAVIA) (IT)
(74) Representative: Petruzziello, Aldo

(57) **Abstract**

A machine (1) is described for removing the weld bead from tubes (2) continuous-welded longitudinally to their axis, which comprises at least one abrasive tool (3) coupled with a motor (8) and inclined with respect to the longitudinal axis of the welded tube (2).

The inclination of the at least one abrasive tool (3) with respect to the longitudinal axis of the welded tube (2) is preferably about 15° and is in any case between 10° and 20°.

The at least one abrasive tool (3) advantageously consists of a mechanically fixed flap-wheel and the machine (1) comprises at least two abrasive tools (3) inclined in opposite directions with respect to the longitudinal axis of the welded tube (2).

## Description

The present invention relates to a machine for removing the weld bead from tubes continuous-welded longitudinally to their axis, which comprises at least one abrasive tool coupled to a motor and inclined with respect to the longitudinal axis of the welded tube.

Known to the art are systems for the continuous production of welded tubes which comprise, in cascade with each other, at least one coil reel and the assemblies for forming the tube, welding the formed tube, scarfing the welded tube (i.e. removing the weld bead), calibrating the scarfed tube, straightening the calibrated tube and cutting the straightened tube into portions of a prefixed length.

At the input to the forming assembly, between two adjacent assemblies and at the output from the cutting assembly, drive rollers and/or guide rollers for the coil, the continuous tube being formed or formed and/or the cut tube are normally present.

The coil reel, the forming, welding, calibrating, straightening and cutting assemblies and the drive and/or guide rollers will not be described herein because they are per se known and in any case they are outside the scope of the present invention.

In the systems of the prior art, the scarfing assembly consists of at least one ring of abrasive cloth, made to rotate by a motor roller and held in contact with the surface of the welded tube, level with the weld bead, by at least two further rollers.

The scarfing and the surface finishing of the scarfed tube are (or can be) carried out by means of a series of rings of abrasive cloth with an increasingly fine grain, placed in series with each other.

These scarfing systems of the prior art have numerous limits and/or drawbacks, among which:
- the abrasive cloths wear very rapidly, drastically reducing their initial removing capability: it is therefore necessary to stop the system frequently to replace the worn cloths, which can sometimes be re-used to carry out a rougher scarfing and/or surface finish;
- the heat produced during the working of the welded tube by means of the abrasive cloths makes it necessary to cool the tube with water, with the resulting formation of sludge which must be removed.

Object of the present invention is to overcome the aforementioned limits and/or drawbacks of the scarfing assemblies of the prior art; this object is achieved by means of a machine which presents the characterising features illustrated in claim 1; further advantageous characteristics of the invention form the subject matter of the dependent claims.

Further characteristics of the invention will be made clearer by the detailed description that follows, referring to purely exemplifying and therefore non limiting embodiments thereof, illustrated in the appended figures, wherein:
- Figure 1 shows diagrammatically a front view, a perspective view, a sectional view and a top view of a machine according to the invention comprising three flap-wheels; in the top view the casing that encloses the machine has been omitted;
- Figure 2 shows diagrammatically a front view, a side view and an exploded perspective view of one of the flap-wheels of Figure 1;
- Figure 3 shows diagrammatically a front view, a top view and a perspective view of a flap-wheel coupled to the respective motor;
- Figure 4 shows diagrammatically a front view, a perspective view, a sectional view and a top view of a second embodiment of a machine according to the invention, which differs from that shown in Figure 1 in that it comprises only two flap-wheels.

In the appended figures like elements will be designated by the same reference numerals.

The present invention relates to a machine for removing the weld bead from tubes continuous-welded longitudinally to their axis, which comprises at least one abrasive tool coupled to a motor and inclined with respect to the longitudinal axis of the welded tube.

The abrasive tool is advantageously a mechanically fixed flap-wheel, inclined with respect to the longitudinal axis of the welded tube by an angle between 10° and 20°, preferably 15°.

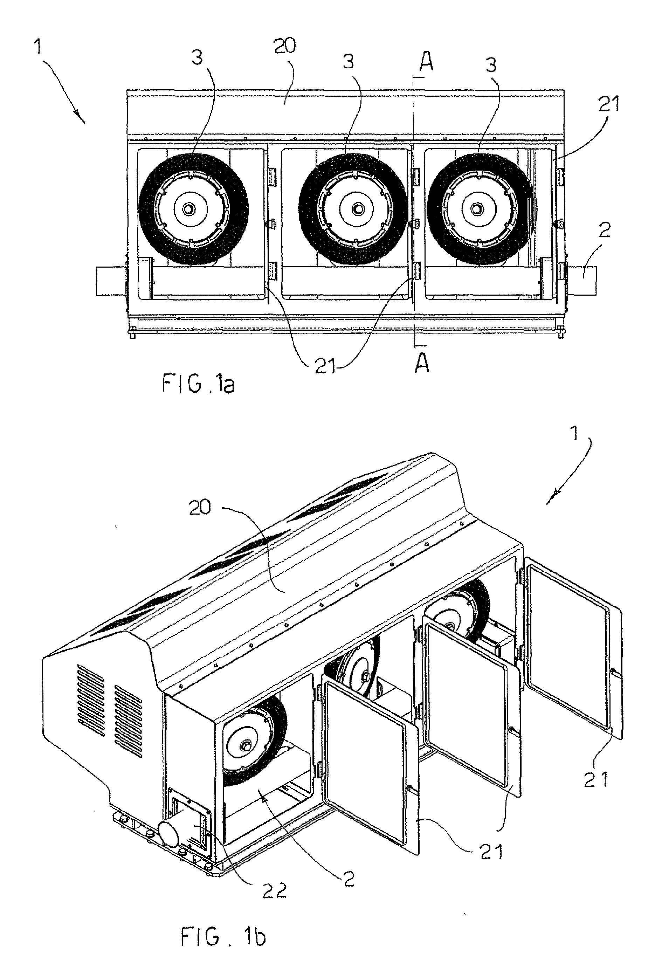

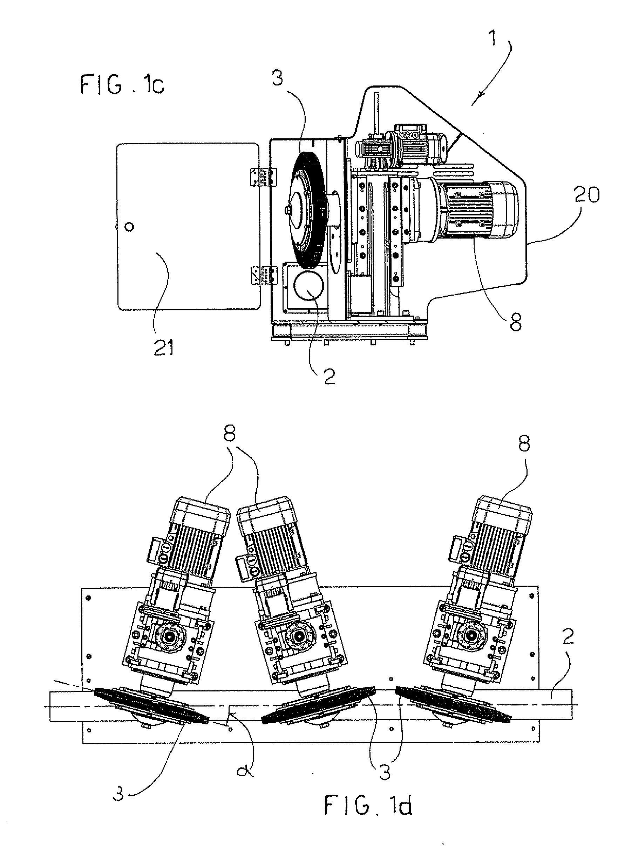

Figure 1 shows diagrammatically a front view (Figure 1a), a perspective view (Figure 1b), a section along the plane A-A of Figure 1a (Figure 1c) and a top view (Figure 1d) of a machine 1 according to the invention comprising three mechanically fixed flap-wheels 3 adapted to remove from the welded tube 2 the weld bead, omitted in Figure 1 for sake of simplicity of the graphic representation.

The mechanically fixed flap-wheels 3 are coupled (directly or by means of gearboxes, omitted for sake of simplicity of the graphic representation) to motors 8 carried, together with the welded tube 2, by a mechanical structure comprising at least the casing 20 and means (per se known) adapted to support the welded tube 2, which enters and exits the machine 1 through two windows 22 formed in the side walls of the casing 20; one of the windows 22 can be seen in Figure 1b.

The welded tube 2 is normally made to advance by drive rollers situated upstream and/or downstream of the machine 1 but, without departing from the scope of the invention, the mechanical structure can also comprise rollers for driving the welded tube 2.

The casing 20 preferably has, coinciding with each flap-wheel 3, a door 21 which allows an easy access to the flap-wheel 3 behind; in Figure 1 the doors 21 are open to show the flap-wheels 3 in contact with the welded tube 2 level the weld bead.

In figure 1d the casing 20 has been omitted to show the flap-wheels 3 inclined alternately in opposite directions by an angle α of between 10° and 20° (preferably 15°) with respect to the longitudinal axis of the welded tube 2.

What is meant by the expression "inclined alternately in opposite directions" is that, if the central flap-wheel 3 is inclined by the angle α, for example in a counter-clockwise direction, the adjacent flap-wheels 3 are inclined, with respect to the longitudinal axis of the welded tube 2, by the same angle α in the opposite direction, for example in a clockwise direction.

More generally, if (in a machine 1 comprising at least two flap-wheels 3) a flap-wheel 3 is inclined (with respect to the longitudinal axis of the welded tube 2) by the angle α in a clockwise direction, the adjacent flap-wheel is inclined (with respect to the longitudinal axis of the welded tube 2) by the same angle α in a counter-clockwise direction (or vice versa).

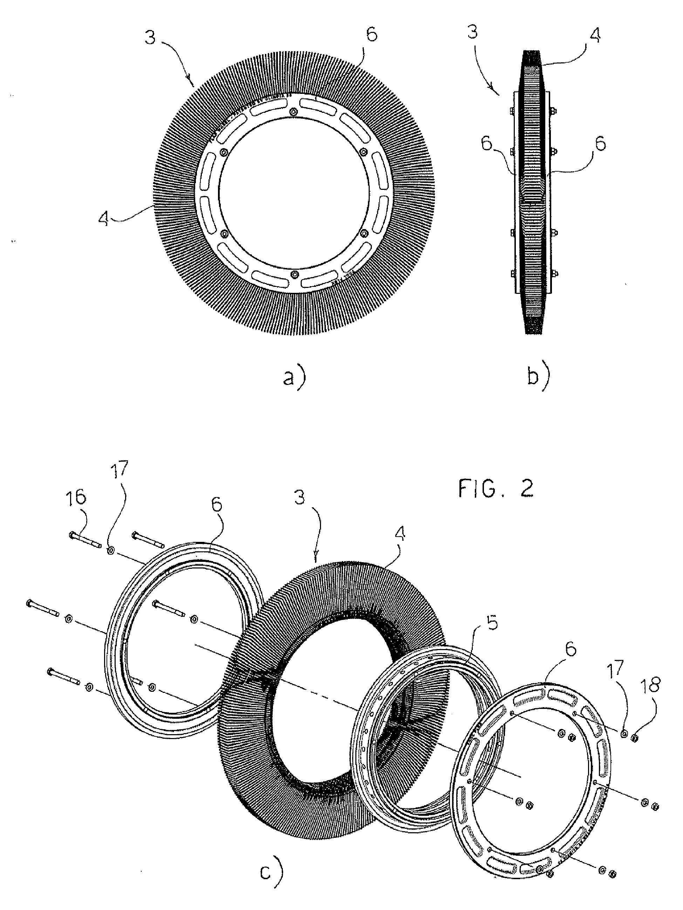

Figure 2 shows diagrammatically a front view (Figure 2a), a side view (Figure 2b) and an exploded perspective view (Figure 2c) of one of the mechanically fixed flap-wheels 3 of Figure 1, not described in detail herein because it is available on the market and is described, for example, in the European Patent EP 1.704.967 in the name of the applicant.

The flap-wheel 3 comprises a plurality of abrasive flaps 4 disposed evenly around a hub 5 and held in place by fixing means (not visible in Figure 2) and by two lateral flanges 6, fixed to each other and to the hub 5 by means of a plurality of bolts 16 and of nuts 18 (Figure 2c); a washer 17 is preferably placed between a flange 6 and each of the bolts 16 and of the nuts 18, respectively.

From figure 2b it can be seen that in order to obtain a better abrasive action, the flaps 4 of the mechanically fixed flap-wheel 3 used in a machine 1 according to the invention advantageously are trapezoid in shape with the major base adjacent to the hub 5 of the flap-wheel 3.

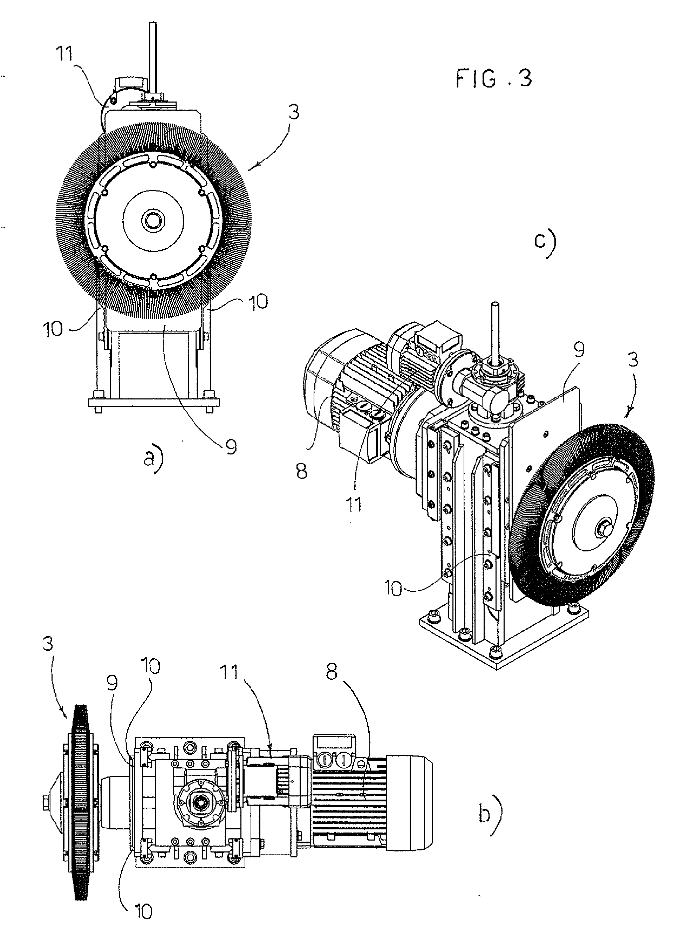

Figure 3 shows diagrammatically a front view (Figure 3a), a top view (Figure 3b) and a perspective view (Figure 3c) of a flap-wheel 3 coupled to the respective motor 8.

The flap-wheel 3 and the motor 8 are preferably carried by a plate 9, moveable along vertical slide guides 10 to vary the distance between the wheel 3 and the surface of the tube 2.

The plate 9 is advantageously moved along the vertical slide guides 10 by a motor 11 controlled in a per se known manner to maintain a constant pressure of the flaps 4 on the tube 2 (pressure measured, for example, by a sensor placed in the flap-wheel 3 and omitted in the figures for sake of simplicity of the graphic representation) and to automatically compensate for the wear on the flaps 4 of the wheel 3.

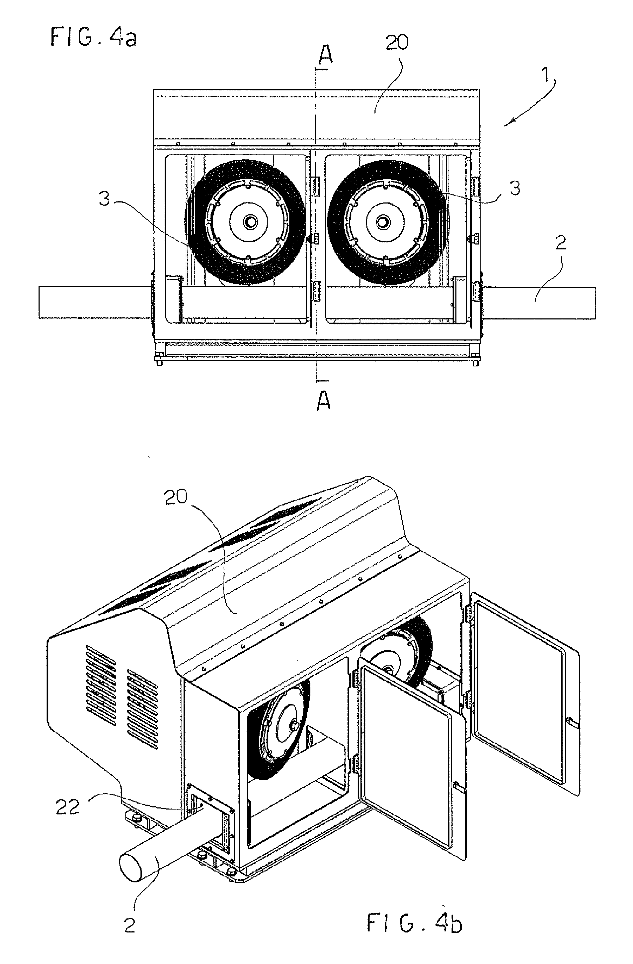

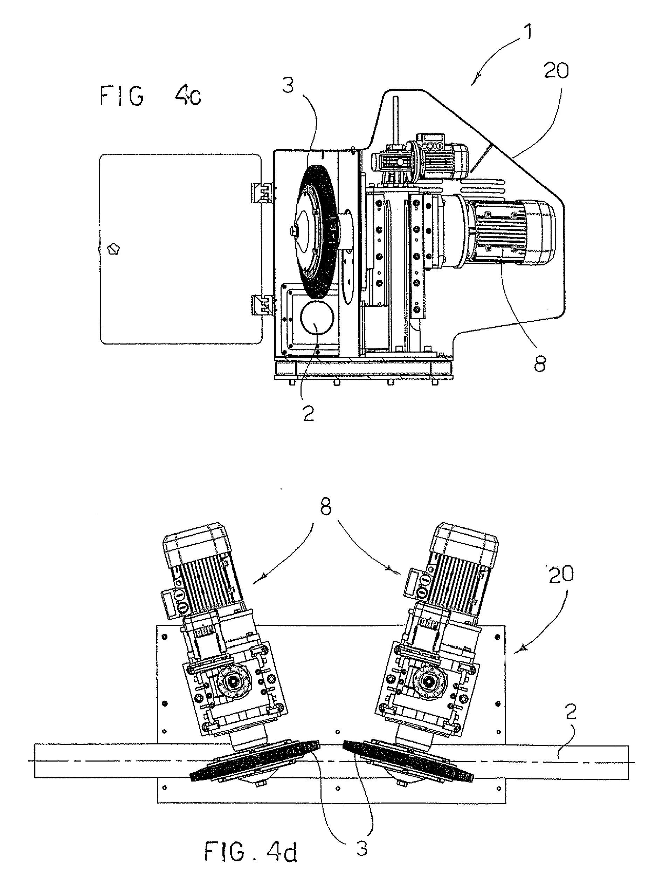

Figure 4 shows diagrammatically a front view (Figure 4a), a perspective view (Figure 4b), a section along the plane A-A of Figure 4a (Figure 4c) and a top view (Figure 4d) of a machine 1 according to the invention, which differs from that shown in the previous figures only in that it comprises two flap-wheels 3, inclined in opposite directions with respect to the longitudinal axis of the tube 2 by an angle α, each one of which is coupled to a motor 8.

Without departing from the scope of the invention, a machine 1 according to the invention may comprise only one flap-wheel 3 inclined by an angle α with respect to the longitudinal axis of the tube 2, or four or more flap-wheels 3 inclined alternately in opposite directions by an angle α with respect to the longitudinal axis of the welded tube 2, similarly to what is shown in Figure 1d.

Always without departing from the scope of the invention, a person skilled in the art can make to the previously described machine for removing the weld bead from welded tubes all changes and improvements suggested by normal experience and/or by the natural evolution of the art.

## Claims

1. A machine for removing the weld bead from tubes (2) continuous-welded longitudinally to their axis, which comprises at least one abrasive tool (3) coupled with a motor (8), **characterised in that** the at least one abrasive tool (3) is inclined with respect to the longitudinal axis of the welded tube (2).

2. A machine (1) as in claim 1, **characterised in that** the at least one abrasive tool (3) is inclined with respect to the longitudinal axis of the welded tube (2) by an angle (α) of between 10° and 20°.

3. A machine (1) as in claim 2, **characterised in that** the at least one abrasive tool (3) is inclined with respect to the longitudinal axis of the welded tube (2) by an angle (α) of 15°.

4. A machine (1) as in claim 2 or 3, **characterised in that** it comprises two abrasive tools (3) inclined in opposite directions by said angle (α) with respect to the longitudinal axis of the welded tube (2).

5. A machine (1) as in claim 2 or 3, **characterised in that** it comprises at least three abrasive tools (3) inclined alternately in opposite directions by said angle (α) with respect to the longitudinal axis of the welded tube (2).

6. A machine (1) as in claim 1, **characterised in that** the at least one abrasive tool (3) and the respective motor (8) are carried by a plate (9) movable along vertical slide guides (10) to vary the distance between the at least one abrasive tool (3) and the surface of the tube (2).

7. A machine (1) as in claim 6, **characterised in that** the plate (9) is moved along the vertical slide guides (10) by a motor (11).

8. A machine (1) as in claim 1, **characterised in that**, coinciding with each flap-wheel (3), it has a door (21) adapted to allow an easy access to the flap-wheel (3) behind.

9. A machine (1) according to claim 1, **characterised in that** the at least one abrasive tool (3) is a mechanically fixed flap-wheel comprising a plurality of abrasive flaps (4) disposed evenly around a hub (5).

10. A machine (1) as in claim 9, **characterised in that** the flaps (4) of the mechanically fixed flap-wheel (3) are trapezoid in shape with the major base adjacent to the hub (5) of the flap-wheel (3).
